## Europäisches Patentamt
## European Patent Office
## Office européen des brevets

(19)

(11) Numéro de publication: **0 060 779**
**B1**

(12) **FASCICULE DE BREVET EUROPEEN**

(45) Date de publication du fascicule du brevet: **11.09.85**

(51) Int. Cl.⁴: **A 47 J 37/12, G 07 F 9/10**

(21) Numéro de dépôt: **82400437.8**

(22) Date de dépôt: **11.03.82**

(54) **Friteuse industrielle à cuve de friture obturable hermétiquement.**

(30) Priorité: **13.03.81 FR 8105027**

(43) Date de publication de la demande:
**22.09.82 Bulletin 82/38**

(45) Mention de la délivrance du brevet:
**11.09.85 Bulletin 85/37**

(84) Etats contractants désignés:
**BE DE GB IT LU NL**

(56) Documents cités:
**FR - A - 2 109 537**
**US - A - 2 074 044**
**US - A - 2 108 627**
**US - A - 2 175 531**
**US - A - 3 272 111**
**US - A - 3 357 341**

(73) Titulaire: **Mariotti, René, 30 rue du Calvaire,
F-92210 Saint-Cloud (FR)**

(72) Inventeur: **Mariotti, René, 30 rue du Calvaire,
F-92210 Saint-Cloud (FR)**

(74) Mandataire: **Sauvage, Renée, CABINET
SAUVAGE 100 bis, avenue de Saint-Mandé,
F-75012 Paris (FR)**

BUNDESDRUCKEREI BERLIN

## Description

La présente invention a pour objet une cuve pour friteuse industrielle, notamment adaptée à la cuisson de doses successives d'aliments surgelés consommables après friture et à la distribution de ces doses dans des gobelets.

La friteuse selon l'invention peut en particulier être réalisée sous la forme d'une machine, déclenchée par l'introduction d'une pièce ou d'un jeton, distribuant à la demande des aliments frits, extemporanément. Il peut s'agir de frites ou de tous autres aliments susceptibles d'être surgelés et cuits par friture, tels que croquettes de poissons, beignets, etc.

Il existe déjà des friteuses industrielles du type précité. Elles n'ont guère rencontré de succès commercial en raison des résultats décevants qu'elles fournissent, ce, pour diverses raisons qui proviennent notamment de l'exposition de l'huile de friture à l'air et à la lumière et du mode de dosage des aliments surgelés qui entraîne souvent une décongélation de ces aliments avant friture et un écrasement de ces aliments dans le dispositif de dosage, sans parler d'une grande irrégularité dans les doses fournies.

La présente invention a pour but de remédier à ces inconvénients, but qui est atteint en ce sens qu'elle propose une friteuse comprenant une cuve garnissable d'huile de friture et un panier ajouré adapté au trempage desdits aliments dans l'huile de la cuve, ladite cuve étant constituée d'une enceinte fermée comportant une ouverture latérale, le panier ajouré se prolongeant à sa partie supérieure, du côté de l'ouverture, par un déflecteur qui permet le chargement et le déchargement du panier ajouré par exposition du déflecteur à l'extérieur de l'enceinte, au travers de l'ouverture de l'enceinte, ladite friteuse étant caractérisée en ce que l'ouverture est obturable hermétiquement par une porte montée pivotante sur la paroi de l'enceinte et s'ouvrant vers l'extérieur de l'enceinte, et en ce que le déflecteur est solidarisé de ladite porte, grâce à quoi l'ouverture de la porte expose le déflecteur à l'extérieur de l'enceinte et permet la réception des aliments dans le panier et leur évacuation par simple gravité.

De cette manière, la cuve de friture ne s'ouvre sur l'extérieur que pour le chargement et le déchargement du panier et, hors de ces périodes, la cuve est hermétiquement fermée.

On connaît, d'après le brevet US 2 108 627 une machine à cuire le maïs pour en faire du pop corn. Cependant, la cuve de cuisson de cette machine n'est pas fermée hermétiquement: la paroi du panier contenant le maïs coopère simplement avec le »plafond« courbe de la cuve pour empêcher que le maïs qui éclate et saute en cuisant s'échappe de la cuve.

Dans la friteuse selon l'invention, le fond du déflecteur est avantageusement coextensif à la porte et le mouvement du panier étant lié à celui de la porte, cela supprime tout mécanisme particulier pour le dégagement du panier hors de la cuve.

Dans les friteuses connues, la cuve ouverte est incluse dans une armoire qui comporte des moyens assurant la circulation de l'air entre une entrée et une sortie d'air pratiquées dans les parois de ladite armoire, avec interposition d'un dispositif filtrant sur le circuit de sortie d'air.

Une ventilation aspire l'air ambiant, le fait circuler aux alentours de l'huile en cours d'utilisation et le rejette à l'atmosphère. Il s'ensuit une pollution inévitable, du fait que le volume d'air brassé est important et que le dispositif filtrant est généralement insuffisant.

Selon l'invention, en aval du dispositif filtrant, le circuit d'air est relié à l'entrée d'air.

Ainsi, le volume d'air dans lequel se fait la friture n'est pas rejeté à l'atmosphère: il circule en circuit fermé, en étant débarrassé des graisses qu'il véhicule après son passage en surface de l'huile de friture, par le dispositif filtrant. Dans ce cas, la filtration est efficace car le volume d'air traité est faible. La vapeur d'eau provenant des aliments en cours de friture est condensée à l'extérieur de la cuve et éliminée avant le recyclage de l'air.

Il n'est pas indispensable que le dispositif filtrant débarrasse le courant d'air des odeurs dont il peut être chargé puisque ces odeurs sont fortement réduites par le soin qui est apporté à la conservation de l'huile et que, de toute manière, elles ne sont perceptibles qu'à l'intérieur de la cuve fermée.

Dans les friteuses antérieurement connues, les aliments surgelés à frire sont stockés dans un compartiment isolé thermiquement et maintenu à une température appropriée et, canalisés par une trémie, ils tombent soit dans une mesure évidée dans un cylindre bouchant l'ouverture de la trémie auquel cas le dosage de chaque portion est volumétrique, soit sur le plateau d'une balance, auquel cas le dosage est pondéral.

C'est à ce second type qu'appartient la machine selon l'invention. Plus précisément, l'unité de conservation des aliments surgelés et de dosage des portions successives de ces aliments comprend un compartiment fermé isolé thermiquement et maintenu à une température appropriée, lequel compartiment renferme:

— un bac à aliments surgelés s'ouvrant sur des moyens convoyeurs;
— des moyens convoyeurs recueillant les aliments en provenance dudit bac et les acheminant vers le plateau récepteur d'une balance;
— une balance dont le plateau récepteur de produits à peser comporte des moyens d'évacuation qui débouchent au-dessus d'une ouverture pratiquée dans la paroi du compartiment;
— des organes commandant l'avancée des moyens convoyeurs en réponse aux indications fournies par la balance; et

— des organes commandant le déclenchement des moyens d'évacuation du plateau récepteur de la balance, en réponse à une sollicitation extérieure.

Dans une forme d'exécution préférée, le plateau récepteur de la balance revêt la forme d'une cuvette dont le fond est constitué par le rapprochement des bords libres d'éléments séparés constituant ladite cuvette, ces éléments étant montés pivotants de manière à pouvoir se rapprocher l'un de l'autre (position de pesée) ou à s'écarter l'un de l'autre (position d'évacuation de la portion pesée).

Ainsi, les aliments pesés chutent naturellement par le fond ouvert de la cuvette et ne peuvent être écrasés par aucune pièce en mouvement.

Une forme d'exécution de l'invention est décrite ci-après à titre d'exemple non limitatif, par référence aux dessins annexés dans lesquels:

La figure 1 est une coupe de l'ensemble cuve de friture/réservoir d'huile de la friteuse;

la figure 2 est une vue de côté de l'ensemble de la figure 1;

la figure 3 est une vue de dessus des conduites reliant le réservoir d'huile et la cuve;

la figure 4 montre l'implantation des vérins commandant l'ouverture de la porte de la cuve;

la figure 5 représente, en coupe, l'unité de conservation et de distribution des aliments surgelés, et

la figure 6 représente, en coupe, les moyens de dosage des aliments surgelés.

La friteuse selon l'invention comprend principalement:

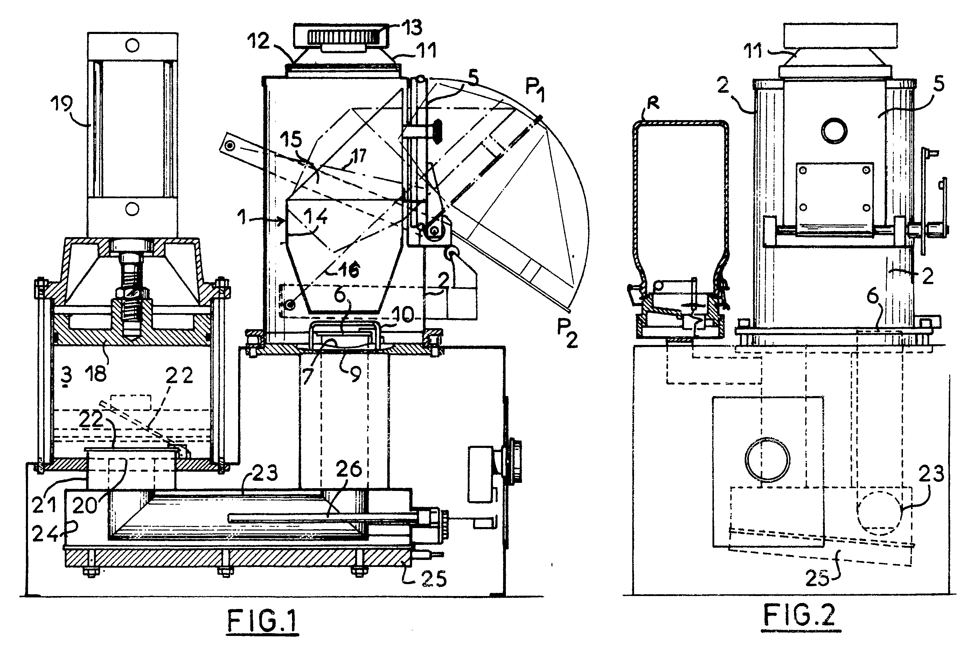

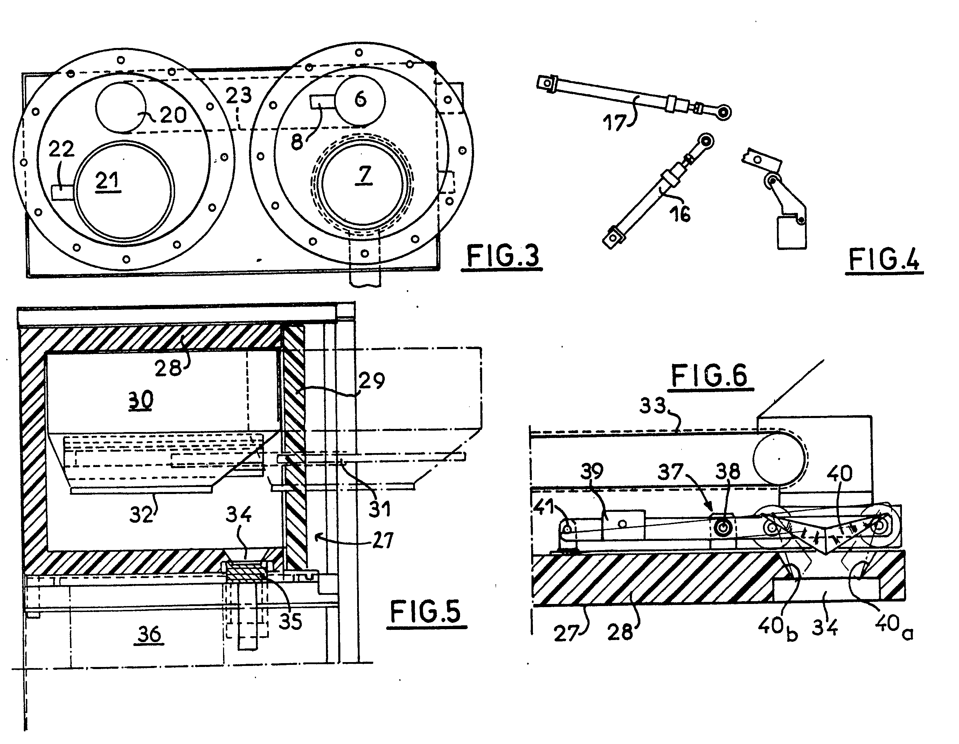

— une unité de conservation et de distribution d'aliments surgelés (figure 5), renfermant:
— des moyens de dosage de portions successives d'aliments (fig. 6), qui pèsent une quantité déterminée d'aliments et les font tomber dans un panier à friture, dont est munie
— une cuve de friture 2 (fig. 1), alimentée en huile par
— un réservoir d'huile 3 (fig. 1).

Ces différents éléments constitutifs et leur fonctionnement vont être décrits ci-après, en commençant par la partie »friteuse« proprement dite.

Comme il ressort des figures 1 et 2, la cuve de friture 2 constitue une enceinte fermée accessible, de l'extérieur, par une porte 5. La zone de contact entre la porte 5 et l'ouverture de la cuve qu'obture cette porte 5 est garnie d'un joint en silicone assurant l'étanchéité. Le fond de la cuve comporte une ouverture d'admission d'huile 6 et une ouverture d'évacuation d'huile 7 bien visibles à la fig. 3. L'ouverture d'admission d'huile 6 est munie d'un clapet 8 ne s'ouvrant que sous l'effet d'une pression positive exercée depuis l'extérieur de la cuve 2. Un dispositif de filtration 9, pourvu d'une poignée 10 pour le démontage, est disposé sur l'ouverture d'évacuation 7. A sa partie supérieure, la cuve de friture 2 est pourvue d'une hotte d'aspiration d'air il garnie d'un filtre à matières grasses 12 remplaçable et elle est réunie à une turbine 13. La sortie de la turbine 13 est raccordée à une ouverture, non représentée, prévue à mi-hauteur de la cuve 2. Sur la conduite de raccordement, également non représentée, est interposé un dispositif de condensation de vapeur d'eau et d'élimination des condensats. La cuve 2 renferme un panier à friture 1 dont le fond 14 est en grillage métallique. Du côté de la porte 5, le panier se prolonge par une partie pleine en acier inoxydable formant déflecteur 15. Le fond plat de ce déflecteur 15 est coextensif à la porte 5 et est fixé sur cette dernière. Il s'ensuit que le panier 1 est solidarisé de la porte 5. Le bas de la porte 5 est monté pivotant sur la paroi de la cuve 2. Un couple de vérins 16 et 17 (fig. 4) commande l'ouverture de la porte 5. Le vérin 16 la déplace entre sa position de fermeture et la position P1 (fig. 1) et le vérin 17 entre cette position P1 et la position P2 (fig. 1). Lorsque la porte 5 est fermée, le joint de silicone vient s'écraser dans un logement prévu à cet effet sous l'action de la pression exercée par le vérin 16.

Le réservoir d'huile revêt la forme d'un cylindre dans lequel coulisse un piston 18 soumis à l'effet d'un vérin 19. Le fond du réservoir est pourvu d'une ouverture de refoulement d'huile 20 et d'une ouverture de réadmission d'huile 21 munie d'un clapet 22 qui ne s'ouvre que sous l'effet d'une pression négative intérieure au réservoir 3.

L'ouverture de refoulement d'huile 20 du réservoir 3 est réunie par une conduite 23 à l'ouverture d'admission d'huile 6 de la cuve 2 et l'ouverture d'évacuation d'huile de la cuve 2 est réunie par une conduite 24 à l'ouverture de réadmission d'huile 21 du réservoir 3.

La conduite 23 est incluse dans la conduite 24 formant manchon et dont la base est pourvue de moyens de chauffage électriques adaptés à porter l'huile à la température de friture voulue, réglée grâce à un thermostat 26. Il est également prévu un thermostat de sécurité, non représenté, interrompant le chauffage en cas de surchauffe.

Le niveau d'huile dans le réservoir 3 est maintenu constant grâce à une réserve R appropriée (fig. 2).

Si l'on se raporte maintenant aux figures 5 et 6, on voit que l'unité de conservation et de dosage des aliments surgelés est constituée d'un compartiment 27 pourvu d'une isolation thermique 28. Il est prévu des moyens réfrigérants 36, adaptés au maintien d'une température propre à la conservation convenable des aliments surgelés telle que −18° C, le compartiment 27 s'ouvre par une porte latérale 29 qui permet d'en extraire un bac 30 de stockage. Ce bac 30 coulisse dans des glissières appropriées 31. La base du bac 30 forme une trémie 32 dont l'ouverture débouche au-dessus d'un tapis convoyeur 33 (fig. 6).

Une ouverture 34 d'évacuation d'aliments est pratiquée dans la base de l'enceinte 27. Cette ouverture 34 est obturable par une trappe pivotante 35.

Il est prévu, dans le compartiment 27, une balance 37 dont le fléau pivotant autour de l'axe 38 est muni, sur l'un de ses bras, d'un contrepoids 39 et, sur l'autre de ses bras, d'un plateau récepteur 40.

Le contrepoids est choisi en fonction du poids d'aliments surgelés devant former une dose. Sur l'arc décrit par l'extrémité du bras portant le contrepoids setrouvent des moyens interrupteurs 41 intervenant sur le circuit de commande d'avancée du tapis convoyeur 33.

Le plateau récepteur 40, qui se trouve à l'aplomb de l'une des extrémités du tapis convoyeur 33, est formé en deux parties 40a et 40b susceptibles de se rapprocher ou de s'écarter. A l'état rapproché, elles forment un réceptacle pour les aliments tombant du tapis convoyeur 33. Leur écartement est commandé par une sollicitation extérieure, telle que l'introduction d'une pièce dans un dispositif de commande approprié.

L'ouverture 34 de l'enceinte 27 est située à l'aplomb du déflecteur 15 du panier 1 lorsque la porte 5 occupe la position P1.

La position P2 dirige ce même déflecteur vers un gobelet non représenté et qui provient d'une unité distributrice de gobelets également non représentée.

Le fonctionnement de la friteuse est le suivant:

entre deux utilisations une dose d'aliments précédemment pesée est en attente sur le plateau récepteur 40 de la balance à l'intérieur de l'unité de conservation et de dosage. La cuve de friture 2 est fermée et vide. Le piston 18 du réservoir d'huile est en haut de sa course et de l'huile remplit la conduite 23. Les moyens de chauffage électriques 25 sont sous tension, maintenant cette huile à une température de l'ordre de 180°C.

Lorsqu'un utilisateur désire une portion d'aliments, il déclenche les différents mécanismes de la friteuse, soit en pressant sur un bouton, soit en introduisant une pièce de monnaie ou un jeton dans un dispositif approprié.

Le piston s'abaisse alors dans le réservoir 3 en refoulant l'huile dans la conduite 23. Sous l'effet de la pression le clapet 8 de l'ouverture d'admission s'ouvre et une quantité d'huile à 180°C pénètre dans la cuve de friture 2. En fin de course du piston 18, il n'y a plus de pression exercée et le clapet 8 se referme. En même temps que le piston, la turbine 13 a été actionnée, et elle brasse l'air en circuit fermé, en le filtrant au passage.

Simultanément, le vérin 16 repousse la porte 5 jusqu'à la position P1 en basculant le panier 1 de telle sorte que son déflecteur 15 vienne à l'aplomb de l'ouverture 34 de l'unité de conservation d'aliments 27. La trappe 35 pivote alors et laisse tomber dans le panier 1 la portion d'aliments que supportait jusqu'ici le plateau récepteur 40 de la balance. Les deux parties 40a et 40b de ce plateau s'écartent, en effet, en même temps que la trappe s'ouvre. Le vérin 16 referme la porte 5 en plongeant du même coup le panier 1 et son contenu dans le bain de friture.

Après environ 40 secondes, la cuisson est terminée; le piston 18 remonte en aspirant l'huile de friture au travers du dispositif de filtration 9 garnissant l'ouverture d'évacuation 7 de la cuve 2. L'huile passe dans la conduite 24 et est réadmise dans le réservoir 3 par l'ouverture 21 en repoussant le clapet 22.

Pendant la vidange de la cuve 2, les aliments frits s'égouttent. Le vérin 16, puis le vérin 17, repoussent la porte 5 jusqu'en position P2. Les aliments frits tombent alors du panier 1 dans un gobelet disposé à cet effet.

Le vérin 17, puis le vérin 16 referment la porte 5.

Pendant ce temps, le circuit du tapis convoyeur 33 a été mis sous tension, des aliments surgelés sont venus tomber dans le plateau récepteur 40 de la balance 37 jusqu'à concurrence du contrepoids 39. Le poids voulu atteint, le tapis convoyeur 33 s'est arrêté, une nouvelle portion d'aliments surgelés demeurant en attente sur le plateau récepteur.

La turbine 13 s'arrête alors et la friteuse peut être actionnée de nouveau.

## Revendications

1. Friteuse industrielle alimentée, d'une part, en aliments surgelés consommables après friture et, d'autre part, en huile, comprenant une cuve (2) garnissable d'huile de friture et un panier ajouré (1) adapté au trempage desdits aliments dans l'huile de la cuve, ladite cuve (2) étant constituée d'une enceinte fermée comportant une ouverture latérale, le panier ajouré (1) se prolongeant à sa partie supérieure, du côté de l'ouverture, par un déflecteur qui permet le chargement et le déchargement du panier ajouré (1) par exposition du déflecteur (15) à l'extérieur de l'enceinte, au travers de l'ouverture de l'enceinte, caractérisée en ce que l'ouverture est obturable hermétiquement par une porte (5) montée pivotante sur la paroi de l'enceinte et s'ouvrant vers l'extérieur de l'enceinte, et en ce que le déflecteur (15) est solidarisé de ladite porte (5), grâce à quoi l'ouverture de la porte (5) expose le déflecteur (15) à l'extérieur de l'enceinte et permet la réception des aliments dans le panier et leur évacuation par simple gravité.

2. Friteuse selon la revendication 1, caractérisée en ce que le fond du deflecteur (15) est coextensif à la porte (5).

3. Friteuse selon la revendication 1 ou 2, comprenant une unité de conservation desdits aliments surgelés et de dosage de portions successives de ces aliments, cette unité étant formée d'un compartiment (27) isolé thermiquement, maintenu à une température appropriée et renfermant:

— un bac à aliments surgelés (30) s'ouvrant sur des moyens convoyeurs (33);
— des moyens convoyeurs (33) recueillant les aliments en provenance dudit bac (30) et les acheminant vers le plateau récepteur (40) d'une balance (37);

— une balance (37) dont le plateau récepteur (40) de produits à peser comporte des moyens d'évacuation qui débouchent au-dessus d'une ouverture (34) pratiquée dans la paroi du compartiment;

— des organes commandant l'avancée des moyens convoyeurs (33) en réponse aux indications fournies par la balance; et

— des organes commandant le déclenchement des moyens d'évacuation du plateau récepteur 40 de la balance 37, en réponse à une sollicitation extérieure, caractérisée en ce que la plateau récepteur 40 de la balance 37 revêt la forme d'une cuvette dont le fond est constitué par le rapprochement des bords libres d'élements séparés 40a et 40b constituant ladite cuvette, ces éléments étant montés pivotants de manière à pouvoir se rapprocher l'un de l'autre (position de pesée) ou à s'écarter l'un de l'autre (position d'évacuation de la portion pesée).

4. Friteuse selon l'une quelconque des revendications 1 à 3 dans laquelle la cuve 2 comporte des moyens 13 assurant la circulation de l'air entre une entrée et une sortie d'air pratiquée dans les parois de la cuve, avec interposition d'un dispositif filtrant 12 sur le circuit de sortie d'air, caractérisée en ce que, en aval du dispositif filtrant 12, ledit circuit de sortie d'air est relié à entrée d'air.

## Patentansprüche

1. Industrielle Friteuse, die einerseits mit tiefgefrorenen, nach dem Fritieren verzehrbaren Lebensmitteln und andererseits mit Öl versorgt wird, enthaltend einen mit Fritieröl beschickbaren Behälter (2) und einen durchbrochenen Korb (1), der zum Eintauchen der Lebensmittel in das Öl des Behälters eingerichtet ist, wobei der Behälter (2) von einem geschlossenen Mantel gebildet ist, der eine seitliche Öffnung aufweist, der durchbrochene Korb (1) sich in seinem Oberteil auf seiten der Öffnung in einer Leitplatte verlängert, die das Beladen und Entladen des durchbrochenen Korbes (1) durch Herausholen der Leitplatte (15) aus dem Mantel durch die Öffnung des Mantels hindurch gestattet, dadurch gekennzeichnet, daß die Öffnung durch eine Tür (5) hermetisch verschließbar ist, die schwenkbar am Umfang des Mantels angebracht ist und sich nach außerhalb des Mantels öffnet, und daß die Leitplatte (15) fest mit der Tür (5) verbunden ist, dank welcher die Öffnung der Tür (5) die Ablenkplatte (5) dem Äußeren des Mantels aussetzt und die Aufnahme von Lebensmitteln in den Korb und ihre Entleerung durch einfache Schwerkraft gestattet.

2. Friteuse nach Anspruch 1, dadurch gekennzeichnet, daß der Boden der Leitplatte (15) sich bündig mit der Tür (5) erstreckt.

3. Friteuse nach Anspruch 1 oder 2, enthaltend eine Einheit zur Aufbewahrung der tiefgekühlten Lebensmittel und zur Dosierung von aufeinanderfolgenden Portionen dieser Lebensmittel, wobei diese Einheit aus einem thermisch isolierten Abteil (27) gebildet ist, das auf einer geeigneten Temperatur gehalten ist und umfaßt:

— einen Trog (30) für tiefgefrorene Lebensmittel, der sich auf Transporteinrichtungen (33) öffnet;

— Transporteinrichtungen (33), die die von dem Trog (30) stammenden Lebensmittel aufnehmen und sie zu einer Aufnahmeschale (40) einer Waage (37) führen;

— eine Waage (37), deren Aufnahmeschale (40) für die zu wiegenden Produkte Entleerungseinrichtungen aufweist, die oberhalb einer Öffnung (34) münden, die in der Wand des Abteils ausgebildet ist;

— Organe, die den Vorschub der Transporteinrichtungen (33) in Abhängigkeit von durch die Waage zugeführten Angaben steuern, und

— Organe, die das Auslösen der Entleerungseinrichtungen der Aufnahmeschale (40) der Waage (37) in Abhängigkeit von einer äußeren Anforderung steuern, dadurch gekennzeichnet, daß die Aufnahmeschale (40) der Waage (37) die Form einer Mulde hat, deren Boden durch Annäherung der freien Wände von getrennten Elementen (40a und 40b) gebildet ist, die die Mulde bilden, wobei die Elemente schwenkbar so montiert sind, daß sie sich einander annähern können (Wiegeposition) oder sich voneinander weg spreizen können (Entleerungsposition der gewogenen Portion).

4. Friteuse nach einem der Ansprüche 1 bis 3, bei der die Schale (3) Einrichtungen (13) aufweist, die die Zirkulation von Luft zwischen einem Lufteintritt und einem Luftaustritt sicherstellen, die in den Wänden der Schale ausgebildet sind, mit Einfügung einer Filtereinrichtung (12) über dem Luftaustritt, dadurch gekennzeichnet, daß stromaufwärts der Filtereinrichtung (12) der Luftaustrittskreis mit dem Lufteintritt verbunden ist.

## Claims

1. An industrial deep fryer supplied on the one hand with deep frozen foods consumable after frying and, on the other hand, with oil comprising a tank (2) fillable with frying oil and a perforated basket (1) adapted for plunging said foods into the oil in the tank, said tank (2) being formed by a closed enclosure comprising a lateral opening, the perforated basket (1) being extended at its upper part, on the opening side, by a deflector which allows loading and unloading of the perforated basket (1) by exposure of the deflector (15) to the outside of the enclosure, through the opening of the enclosure, characterized in that the opening is hermetically closable by means of a door (5) mounted for pivoting on the wall of the enclosure and opening outwardly of the enclosure, and in that the deflector (15) is fixed to said door (5), whereby the opening of the door (5) exposes the deflector (15) to the outside of the enclosure and allows reception of the foods in the basket and removal thereof by simple gravity.

2. Deep fryer according to claim 1, characterized in that the bottom of the deflector (15) is coextensive with the door (5).

3. Deep fryer according to claim 1 or 2, comprising a unit for preservation of said deep frozen foods and for determining the quantity in successive portions of these foods, this unit being formed from a thermally isolated compartment (27), kept at an appropriate temperature and containing:

— a deep frozen food tray (30) opening onto conveyer means (33);
— conveyer means (33) collecting the foods coming from said tray (30) and conveying them to the receiving plate (40) of a weighing machine (37);
— a weighing machine (37) whose plate (40) receiving products to be weighed comprises removal means which open above an opening (34) formed in the wall of the compartment;
— members controlling the advance of the conveyor means (33) in response to the indications supplied by the weighing means; and
— means controlling the setting in motion of the removal means of the receiving plate 40 of the weighing machine 37, in response to an external actuation, characterized in that the receiving plate (40) of the weighing machine (37) has the form of a dish whose bottom is formed by the coming together of the free edges of separate elements (40a and 40b) forming said dish, these elements being mounted for pivoting so as to be able to draw close to one another (weighing position) or to move away from one another (position for removal of the weighed portion).

4. Deep fryer according to any one of claims 1 to 3, in which the tank (2) comprises means (13) ensuring the circulation of air between an air inlet and an air outlet formed in the walls of the tank, with interpositioning of a filtering device 12 in the air outlet circuit, characterized in that, downstream of the filtering device 12, said air outlet circuit is connected to the air inlet.

FIG.1

FIG.2

0 060 779

FIG.3

FIG.4

FIG.5

FIG.6

0 060 779